# EUROPÄISCHE PATENTANMELDUNG

(11) **EP 1 382 508 A1**
(43) Veröffentlichungstag der Anmeldung: **21.01.2004**
(21) Anmeldenummer: 03014418.2
(22) Anmeldetag: 30.06.2003
(51) Int. Cl.: B62D 1/04

(54) **Fahrzeug-Lenkrad**

(30) Priorität: 16.07.2002 DE 20210741 U
(71) Anmelder: TRW Automotive Safety Systems GmbH, 63743 Aschaffenburg (DE)
(72) Erfinder: Hauer, Constantin, 63825 Schöllkrippen (DE); Limberger, Alexander, 63071 Offenbach/Main (DE)
(74) Vertreter: Kitzhofer, Thomas, Dipl.-Ing.

(57) **Zusammenfassung**

Ein Fahrzeug-Lenkrad mit einem Skelett (10) und einem Rastelement als Teil einer Rastverbindung für ein mit dem Skelett (10) verbindbares Gassackmodul (13), ist dadurch gekennzeichnet, daß am Skelett (10) wenigstens ein separates Trägerbauteil (14) angeordnet ist, das als Rastelement einen Rastbolzen (16) trägt, der in ein am Gassackmodul (13) angeordnetes, zum Rastbolzen (16) komplementäres Rastelement (20) eingreifen kann.

## Beschreibung

Die Erfindung betrifft ein Fahrzeug-Lenkrad mit einem Skelett und einem Rastelement als Teil einer Rastverbindung für ein mit dem Skelett verbindbares Gassackmodul.

Es hat sich in den letzten Jahren gezeigt, daß insbesondere lösbare Verbindungen zwischen dem Gassackmodul und dem Lenkrad unter Verwendung von am Modul und am Lenkradskelett angebrachten Rastelementen den sicherheitstechnischen Anforderungen Genüge tun. Diese Verbindungen zeichnen sich durch eine leichte Montierbarkeit des Moduls aus.

Die Erfindung schafft eine Verbesserung eines Lenkrads mit einer derartigen Rastverbindung, insbesondere sorgt sie für ein verringertes Bauvolumen.

Dies wird bei einem oben genannten Lenkrad dadurch erreicht, daß am Skelett wenigstens ein separates Trägerbauteil angeordnet ist, das als Rastelement einen Rastbolzen trägt, der in ein am Modul angeordnetes, zum Rastbolzen komplementäres zweites Rastelement eingreifen kann. Durch Verwendung eines Trägerbauteils läßt sich die erforderliche Stabilität des Lenkradskeletts leicht erreichen, so daß der Boden der Lenkradnabe bei gleichzeitiger hoher Stabilität sehr einfach gestaltet werden kann. Die erfindungsgemäße Gestaltung ermöglicht es auch, einen gewöhnlich platzintensiven Entriegelungsmechanismus am Gassackmodul anzuordnen, wodurch im Bereich des Nabenbodens nur noch ein minimaler Bauraum zur Verfügung stehen muß.

Bevorzugt ist das Trägerbauteil ein Blech.

Das Trägerbauteil wird üblicherweise beim Gießen des Skeletts in dieses eingebettet.

Vorzugsweise ist das Skelett um den Rastbolzen herum mit einer Ausnehmung versehen, wobei das Trägerbauteil sogar freigelegt sein kann, um Platz zu sparen.

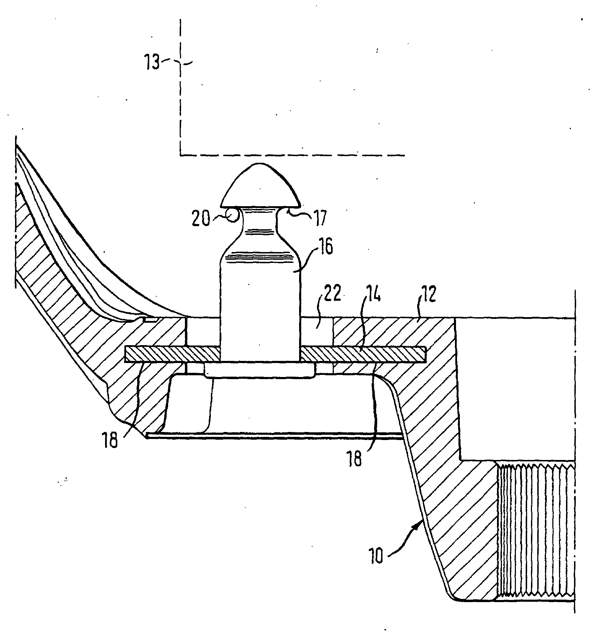

Die einzige Figur zeigt eine Schnittansicht eines Ausschnitts eines erfindungsgemäßen Lenkrads.

Das Skelett 10 des Lenkrads weist einen Nabenbereich 12 mit einem Nabenboden auf, der den unteren Teil eines Hohlraums zur Aufnahme eines Gassackmoduls 13 bildet, das hier nur andeutungsweise gezeigt ist.

Am Skelett 10 befestigt sind bevorzugt mehrere Baugruppen aus jeweils einem Trägerbauteil 14 und einem auf bekannte geeignete Weise fest mit dem Trägerbauteil 14 verbundenen Rastbolzen 16, der ein Rastelement bildet.

Beim Gießen wird das Trägerbauteil 14 in die Gußform eingelegt und somit in das Skelett 10 in den Bereichen 18 eingebettet. Das Trägerbauteil 14 besteht bevorzugt aus einem Metallblech. Um den Rastbolzen 16 herum weist das Skelett 10 eine Ausnehmung 22 auf, so daß das Trägerbauteil 14 abschnittsweise freigelegt ist.

Im fertig gestellten Lenkrad sind der Rastbolzen 16, das Trägerbauteil 14 und der Nabenbereich 12 fest miteinander verbunden.

Der Rastbolzen 16 kann jede Form aufweisen, die dazu geeignet ist, mit einem komplementären Rastelement eine Rastverbindung einzugehen. Im hier gezeigten Beispiel ist am Kopf des Rastbolzens einen Rastfläche 17 ausgebildet.

Das Gassackmodul 13 weist zum Rastbolzen 16 komplementäre Rastelemente 20 auf, die bevorzugt an der Unterseite des Gassackmoduls befestigt sind und z.B. durch je einen Federdraht realisiert sind. Beim Einschieben des Gassackmoduls 13 in den Hohlraum des Lenkrades geht das Rastelement 20 mit der Rastfläche 17 des Rastbolzens 16 eine Rastverbindung ein. Bevorzugt ist am Gassackmodul 13 eine hier nicht gezeigte Entriegelungsmechanik vorgesehen, über die das Gassackmodul wieder vom Lenkrad getrennt werden kann.

## Patentansprüche

1. Fahrzeug-Lenkrad mit einem Skelett (10) und einem Rastelement als Teil einer Rastverbindung für ein mit dem Skelett (10) verbindbares Gassackmodul (13),
**dadurch gekennzeichnet, daß** am Skelett (10) wenigstens ein separates Trägerbauteil (14) angeordnet ist, das als Rastelement einen Rastbolzen (16) trägt, der in ein am Gassackmodul (13) angeordnetes, zum Rastbolzen (16) komplementäres Rastelement (20) eingreifen kann.

2. Fahrzeug-Lenkrad nach Anspruch 1, **dadurch gekennzeichnet, daß** das Trägerbauteil (14) am Skelett eines Nabentopfes (12) des Lenkrads angeordnet ist.

3. Fahrzeug-Lenkrad nach Anspruch 1, **dadurch gekennzeichnet, daß** das Trägerbauteil (14) ein Blech ist.

4. Fahrzeug-Lenkrad nach einem der vorhergehenden Ansprüche, **dadurch gekennzeichnet, daß** das Trägerbauteil (14) und der Rastbolzen (16) eine vorgefertigte Baugruppe bilden.

5. Fahrzeug-Lenkrad nach einem der vorhergehenden Ansprüche, **dadurch gekennzeichnet, daß** das Trägerbauteil (18) in das gegossene Skelett (10, 12) aus Metall eingebettet ist.

6. Fahrzeug-Lenkrad nach Anspruch 5, **dadurch gekennzeichnet, daß** das Skelett (18) um den Rastbolzen (16) herum eine Ausnehmung aufweist.
